# EUROPEAN PATENT APPLICATION

(11) **EP 3 214 323 A1**
(43) Date of publication of application: **06.09.2017**
(21) Application number: 15853957.7
(22) Date of filing: 08.09.2015
(51) Int. Cl.: F16B 19/10

(54) **FASTENING STRUCTURE AND FASTENING METHOD**

(30) Priority: 31.10.2014 JP 2014222595
(71) Applicant: Newfrey LLC, New Britain, CT 06053 (US)
(72) Inventor: TAKEDA Atsushi, Toyohashi-shi Aichi 441-8540 (JP); SAKODA Kanji, Toyohashi-shi Aichi 441-8540 (JP); YAMADA Tomoyoshi, Toyohashi-shi Aichi 441-8540 (JP)
(74) Representative: Haar, Lucas Heinz Jörn
(86) International application number: PCT/JP2015/075431
(87) International publication number: WO 2016/067761

(57) **Abstract**

Provided is a fastening structure including a blind rivet and capable of fastening, with stable fastening force, members to be mounted. A fastening structure is provided with a blind rivet and a nut (30). The blind rivet (1) includes: a rivet body (10) having a hollow sleeve (11) and a rivet head (12) and having a through-hole (14) formed therein; and a mandrel (20) having an elongated shaft (21) and a mandrel head (23). The mandrel head is disposed adjacent to the sleeve side end of the rivet body, and the mandrel shaft passes through the through-hole in the rivet body and protrudes from the rivet head-side end of the rivet body. The nut is disposed on the outer periphery of the sleeve side end of the sleeve of the rivet body and on the outer periphery of the mandrel head. An end of the sleeve is expanded in diameter by the mandrel head, the end having the expanded diameter engages with the female thread (32) of the nut, and members (41, 42) to be mounted are fastened between the nut and the rivet head.

## Description

### Field of Technology

The present invention pertains to a fastening structure. In particular, it pertains to a fastening structure and a fastening method which include a blind rivet that can fasten with a stabilized fastening force.

Blind rivets provided with a hollow metal rivet body comprised of a sleeve and a rivet head on one end of the sleeve, and a metal mandrel with a shaft that extends through and projects out from a through-hole in the rivet body, are well-known. Blind rivets have the advantage that multiple workpieces can be joined working from one side only.

The rivet body of a blind rivet has a rivet head formed on one end, and a tubular hollow sleeve extends from the rivet head. The mandrel of the blind rivet has a head on one end, which has a diameter larger than the inner diameter of the sleeve, and a shaft which passes through the rivet body. The mandrel is inserted into the rivet body so that the head of the mandrel is placed contiguously to one end of the sleeve on the side opposite the rivet head, and the shaft of the mandrel projects out from the rivet head. Thus, the rivet body and the mandrel can be assembled together as the blind rivet.

The assembled blind rivet is inserted into the hole of a workpiece, such as a panel or the like, with the head of the mandrel going first; the rivet head is made to abut the periphery of the hole of the workpiece. The rivet head is held with a fastening tool, and the user pulls firmly the shaft of the mandrel from the rivet head side while gripping the shaft of the mandrel. When this done, one end of the sleeve of the rivet body undergoes deformation by means of the mandrel head so as to expand in diameter, and the mandrel breaks at a narrow breakable portion of the shaft; the workpiece is fastened between the rivet head and the end of the sleeve, which has expanded in diameter.

Because existing blind rivets break the shaft of the mandrel at a narrow breakable portion, a fastening tool is needed, and the workpiece can undergo deformation if the load is not uniform.

Patent Reference 1 discloses a method for securing and attaching multiple components by using a rivet (a blind rivet) comprised of a tubular member (a rivet body) which has a head portion on a base end and a shaft-shaped component (mandrel) inserted therein; by means of pulling the shaft-shaped component out in the direction of the base end, the tip of the tubular member is expanded in diameter. In addition to placing holes in multiple components, for inserting the tubular member, the hole of one component is corrugated, and the corrugations extend roughly in the circumferential direction. The tip of the tubular member expands in diameter in the hole by means of the expanded portion of the shaft-shaped component (the head) and is attached and secured by wedging into the corrugations.

In Patent Reference 1, the tubular member of the rivet enlarges inside the hole of a component and wedges into the corrugations; as a result, a gap is opened between the hole and the tubular member, which the tubular member fills. For this reason, it is not necessary to form the hole to precise dimensions. Also, the surface of the hole has corrugations; because the tubular member enlarges in the hole of the component and wedges into the corrugations, a strong attaching and securing force is obtained.

However, a disadvantage of Patent Reference 1 is that it takes time and effort to machine the workpiece to be attached, since corrugations must be formed in the holes of the workpieces. The tip of the tubular member is expanded in diameter by means of the enlarged portion of the shaft-shaped component when the shaft-shaped component is pulled out; if the enlarged portion does not go into the tip of the tubular member sufficiently, the diameter of the tubular member cannot be expanded adequately.

Also, one problem is that when a shearing-off portion is provided on the shaft-shaped component, the breaking load of the tensile force needed to break it varies greatly; that is, the fastening force is not stabilized.

Patent Reference 2 discloses a mechanism for joining a connector secured to the housing of an electronic device, to a connector on the cable side, in which a spacer component inserted in the housing side connector is made in the form of a blind rivet. The spacer has a standoff component which expands when inserted in a thread hole used to secure the housing side connector, and a female thread which is used for attaching and securing, which engages the thread on the cable side connector. An extracting tool is inserted in the spacer, and after the spacer has been inserted in the thread hole of the connector, the extracting tool is pulled out. The expanded portion of the tip of the extracting tool passes through the through-hole of the spacer while pushing on and widening the hole, and the standoff component is made to expand. The expanded standoff component is tightly attached in the thread hole of the connector, joining the connector and spacer.

In Patent Reference 2, it is not necessary to rotate the screw when attaching the connector; as a result, the connector can be attached rapidly. If the head of the spacer has a hexagonal shape, for example, the spacer can be removed during maintenance by rotating it.

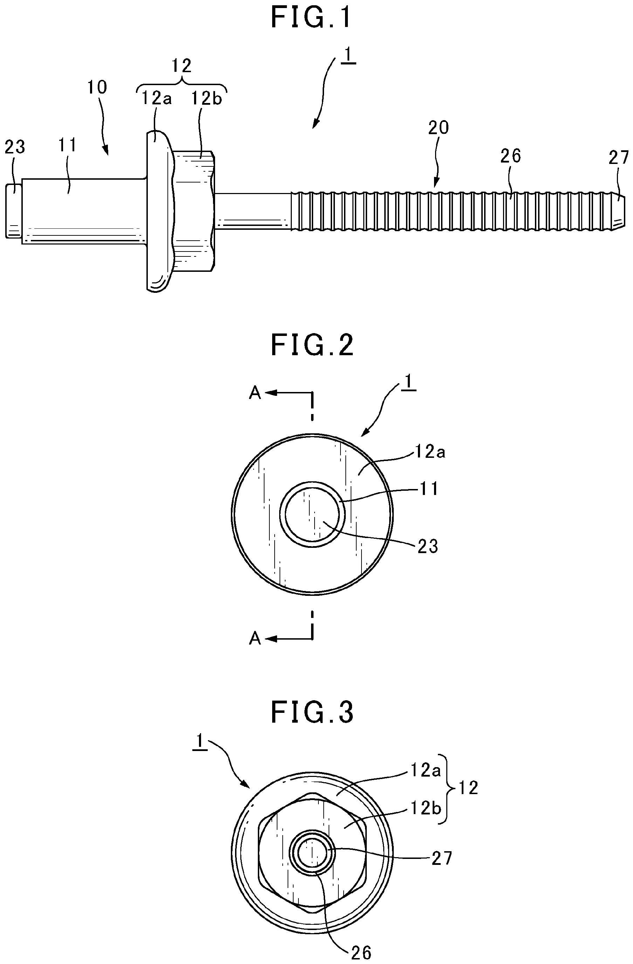

However, a disadvantage of Patent Reference 2 is that time and labor are needed to form a thread hole in the connector. As shown in Figure 1 of Patent Reference 2, the expanded portion of the tip of the extracting tool passes through the through-hole of the spacer while pushing on and widening the hole. The standoff component of the spacer is attached by being tightly secured to the thread hole of the connector. However, if the standoff component of the spacer is stretched when the expanded portion passes through and is made longer in the axial direction of the shaft, a fastening force (shaft force) for compressing the workpiece in the axial direction cannot be obtained.

In References 1 and 2, workpieces can be fastened rapidly with a blind rivet. However, in Reference 1, a disadvantage is that the fastening force is not stabilized; that is, the fastening force varies, because the load on the mandrel is not stabilized during breaking. A further disadvantage is that a fastening force cannot be obtained if the expansion of a component is not adequate. In Patent Reference 2, a disadvantage is that an adequate fastening force cannot be obtained.

For this reason, a blind rivet is sought which can fasten workpieces with a stabilized fastening force, as is a fastening structure that includes such a blind rivet.

### Prior Art References

### Patent References

- Patent Reference 1: Unexamined Patent Publication S 51-22963
- Patent Reference 2: Unexamined Patent Publication 2000-21515

### Summary of the Invention

### Problems the Invention Seeks to Solve

Accordingly, the object of the present invention is to offer a fastening structure and a fastening method which include a blind rivet that achieves a stabilized fastening force.

### Means for Solving these Problems

In order to attain this object, the fastening structure of the present invention is provided with a blind rivet and a nut-shaped component. The rivet body and the mandrel are assembled, and the blind rivet is inserted in the attaching hole of a workpiece, with the head of the mandrel going first. The nut-shaped component is put in place around the end of the sleeve and the head of the mandrel which comes out from the opposite side of the attaching hole. By pulling out the shaft of the mandrel, the diameter of the end of the sleeve is expanded, and the nut-shaped component engages with the female thread. The workpiece is fastened by means of the flange of the rivet body and the nut-shaped component which has engaged with the end of the sleeve.

The first embodiment of the present invention is a fastening structure provided with a blind rivet and a nut-shaped component, for fastening multiple workpieces that have attaching holes, which is characterized by the fact that the blind rivet includes a rivet body which has a hollow sleeve and a rivet head formed on one end of the sleeve, and is formed with a through-hole extending from the sleeve side end to the rivet head side end; a mandrel having a long, narrow shaft that is longer than the rivet body and having an outer diameter smaller than the inner diameter of the sleeve, and a mandrel head having an outer diameter larger than the inner diameter of the sleeve, but smaller than the outer diameter of the sleeve; and in which the mandrel head is placed contiguously to the sleeve side end of the rivet body, the shaft of the mandrel passing through the through-hole of the rivet body and projecting from the rivet head side end;
wherein the inner diameter of the hole of the nut-shaped component is larger than the outer diameter of the sleeve of the rivet body; and wherein the nut-shaped component is placed on the outer periphery of the sleeve side end of the sleeve of the rivet body and the mandrel head.

If a blind rivet that includes a rivet body and a mandrel is used with a nut-shaped component that is formed with a female thread or a circumferential groove, the diameter of the sleeve is expanded, and the sleeve engages in the female thread or circumferential groove; it is thus possible to obtain a fastening structure in which a workpiece can be fastened with a stabilized fastening force.

It is desirable that the rivet head have a large outer diameter flange contiguous to the sleeve and a polygonal portion formed on the end, on the side opposite to the sleeve, contiguous to the flange.

If the flange has a large diameter, the workpiece can be pressed down over a wide area. By forming a polygonal portion, the fastened blind rivet and nut-shaped component can be removed with a wrench.

It is desirable that the flange of the rivet body abut the surface of the workpiece, and for the nut-shaped component be placed so that it abuts a different surface of the workpiece.

If the flange and the nut-shaped component abut the surface of the workpiece, the workpiece can be clamped over a wide area, and held by means of the flange and the nut-shaped component.

It is desirable that the end of the sleeve expand in diameter by being compressed by the mandrel head, and that the end of the sleeve which has expanded in diameter engage in the female thread of the nut-shaped component, so that the workpiece is fastened between the nut-shaped component and the flange.

If the diameter of the end of the sleeve is expanded in diameter by the mandrel head, the end of the sleeve engages deep into the thread of the nut-shaped component, and the workpiece can be held by the nut-shaped component and the flange.

It is desirable that the mandrel break at a breakable portion, and that the mandrel from the breakable portion to the mandrel head remain in the sleeve.

If the mandrel from the breakable portion to the mandrel head remains in the sleeve, it is possible for the end of the sleeve to retain the expanded diameter shape caused by the mandrel head, and the workpiece can be held in a stabilized fashion.

It is desirable that the mandrel head be pulled back into the end of the sleeve, so that the end of the sleeve is expanded in diameter.

If the mandrel head is pulled back into the sleeve, the end of the sleeve is further expanded in diameter, and the end of the sleeve engages even more forcefully in the female thread or the circumferential groove; the workpiece is held by the nut-shaped component and the flange.

It is desirable that the sleeve be compressed in the central axis direction of the blind rivet.

If the sleeve is compressed in the center axis direction of the blind rivet, the workpiece can be held with a strong fastening force.

The second embodiment of the present invention is a fastening structure in which multiple workpieces with holes are fastened by a blind rivet and nut, characterized by the fact that the blind rivet includes a rivet body which has a hollow sleeve and a rivet head formed with a flange on one end of the sleeve and a through-hole extending from the sleeve side end to the rivet head side; a mandrel having a shaft which breaks at a breakable portion, and having a mandrel head on one end; in which a nut is placed on the outer periphery of the sleeve side end of the sleeve of the rivet body and the mandrel head; in which the flange of the rivet body abuts the surface of the workpiece, and the nut abuts another surface of the workpiece;
in which the end of the sleeve is compressed and expanded in diameter by the mandrel head when the mandrel head is pulled back into the end of the sleeve, and the end of the sleeve engages in the female thread of the nut; the workpiece is fastened between the nut and the flange.

The third embodiment of the present invention is a method for fastening multiple workpieces with holes by a blind rivet and a nut, characterized by the fact that the method is provided with a step in which one uses a rivet body which has a hollow sleeve, and a rivet head formed with a flange at one end of the sleeve and which is formed with a through-hole; a mandrel which has a long, narrow shaft that is longer than the sleeve, having an outer diameter smaller than the inner diameter of the sleeve, and a mandrel head that is larger than the inner diameter of the sleeve but smaller than the outer diameter of the sleeve; a nut having an inner diameter larger than the outer diameter of the sleeve of the rivet body. The blind rivet is made from the assembled rivet body and mandrel so that the mandrel head is contiguous to the sleeve side end of the rivet body, and the shaft of the mandrel passes through the through-hole of the rivet body and projects from the rivet head side end. The blind rivet is inserted into the attaching hole of a workpiece with the mandrel head going first, the flange of the rivet body is made to abut the workpiece; the nut is placed on the outer periphery of the mandrel head and the end of the sleeve of the rivet body so that the surface of the nut abuts around the attaching hole of the workpiece.

When the mandrel head is pulled out from the rivet head side, while supporting the rivet head, the end of the sleeve is compressed by means of the mandrel head, expanding in diameter; the outer periphery of the end of the sleeve engages in the female thread of the nut, and the workpiece is fastened between the nut which is engaged in the expanded diameter end of the sleeve and the flange.

### Effectiveness of the Invention

The present invention offers a fastening structure and a fastening method which include a blind rivet that enables a stabilized fastening force.

### Brief Explanation of the Drawings

[Figure 1] is a front elevational view of an embodiment of the blind rivet of the present invention
[Figure 2] is a left side view of the blind rivet in Figure 1.
[Figure 3] is a right side view of the blind rivet in Figure 1.
[Figure 4] is a cross-sectional view of the blind rivet in Figure 1, along line A-A in Figure 2.
[Figure 5] is a perspective view of the nut and the blind rivet in Figure 1, assembled and put in place in the attaching hole of a workpiece.
[Figure 6] is a front elevational view of a portion of what is shown in Figure 5, in cross-section.
[Figure 7] is a cross-sectional view of the step in which the assembled blind rivet and nut are put in place in the attaching hole of a workpiece.
[Figure 8] is a cross-sectional view which shows an intermediate step in fastening a workpiece by means of the blind rivet and nut.
[Figure 9] is a cross-sectional view which shows an intermediate step in fastening a workpiece by means of the blind rivet and nut.
[Figure 10] is a cross-sectional view which shows the step in which the workpiece has been fastened by means of the blind rivet and nut.
[Figure 11] is a diagram showing an example of measuring the relationship between time and stress when fastening the blind rivet.

### Embodiments of the Invention

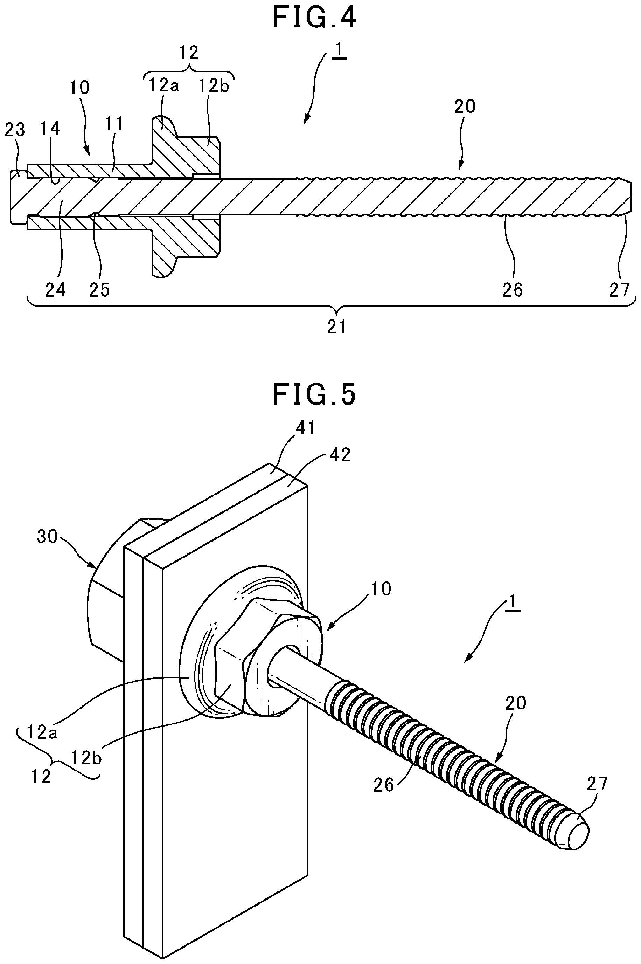

Next, blind rivet 1 according to an embodiment of the present invention will be explained by referring to the Drawings. Figure 1 is a front elevational view of blind rivet 1 in the embodiment of the present invention; Figure 2 is a left side view; and Figure 3 is a right side view. Figure 4 is a cross-sectional view of the blind rivet 1 along line A-A of Figure 2.

Blind rivet 1 is provided with a rivet body 10 and a mandrel 20.

Rivet body 10 includes a tubular sleeve 11 and a rivet head 12 which is formed on one end of sleeve 11, having a larger diameter than sleeve 11. Rivet head 12 has a flange 12a and a polygonal portion 12b which is contiguous to flange 12a.

The outer diameter of flange 12a is larger than the outer diameter of sleeve 11 so that it abuts the surface of workpiece 42 over a wide area. Polygonal portion 12b is formed on the end of rivet body 10 and is formed with a polygonal cross-section; it can be rotated with a wrench, or the like.

In the embodiment of the present invention, rivet head 12 has both a flange 12a and a polygonal portion 12b. Rivet head 12 may be formed with only flange 12a, without the polygonal portion 12b. Also, flange 12a and polygonal portion 12b may be made as one part. In addition, polygonal portion 12b may be a polygonal hole formed in the flange, for inserting a tool such as a wrench, or the like.

Rivet head 10 has a through-hole 14 which extends between the rivet head side end and the sleeve 11 side end. Although it is of such a size to allow the shaft 21 of mandrel 20 to be inserted, it is smaller than the outer diameter of mandrel head 23, and mandrel head 23 abuts and is stopped at the sleeve side end. The outer diameter of sleeve 11 is equal to or larger than the outer diameter of mandrel head 23.

The outer diameter of sleeve 11 is smaller than the inner diameters of attaching holes 43, 44 of workpieces 41, 42, and sleeve 11 can pass through attaching holes 43, 44.

Rivet body 10 may be made from a material that is softer than mandrel 20, for example, aluminum, an aluminum alloy, or the like. In addition, rivet body 10 may be made from the same steel as mandrel 20, or the like.

Mandrel 20 is provided with a long, narrow shaft 21 and mandrel head 23 at one end of shaft 21. The outer diameter of mandrel head 23 is larger than the inner diameter of through-hole 14 of rivet body 10 and smaller than the outer diameter of sleeve 11. The outer diameter of mandrel head 23 is smaller than the inner diameter of attaching holes 43, 44 of workpieces 41, 42 and can pass through attaching holes 43, 44. Shaft 21 is cylindrical and has an outer diameter equal to or smaller than the inner diameter of through-hole 14 of rivet body 10 and can be inserted in through-hole 14. Shaft 21 is longer than through-hole 14 of rivet body 10; when shaft 21 of mandrel 20 is inserted in through-hole 14 of rivet body 10, the tip of shaft 21 projects from the rivet head side end of rivet body 10.

Shaft 21 of mandrel 20 includes, from the mandrel head 23 side, columnar portion 24, breakable portion 25, grip 26 and tip 27. The columnar-shaped columnar portion 24 is contiguous to mandrel head 23. The outer diameter of columnar portion 24 is approximately equal to the inner diameter of sleeve 11; when mandrel 20 is attached to rivet body 10, mandrel 20 cannot slip from rivet body 10. Breakable portion 25 is contiguous to columnar portion 24 and has an outer diameter smaller than columnar portion 24. When the blind rivet is assembled, breakable portion 25 is housed within through-hole 14 of rivet body 10. Breakable portion 25 is the part that breaks when the shaft 21 of mandrel 20 is pulled out using the fastening tool and a certain tensile force is exceeded.

The portion of shaft 21 contiguous to breaking portion 25 is somewhat narrower than columnar portion 24. Farther forward, grip 26 has an outer diameter larger than breaking portion 25. Multiple locking grooves are formed on grip 26 so that when gripped by the gripping component of the fastening tool, it does not slip. The forward portion of tip 27 of shaft 21 narrows, so that it is narrow enough to be easily inserted into the fastening tool. Mandrel 20 is made from steel, or the like.

Mandrel 20 is inserted in through-hole 14 of rivet body 10 from the sleeve side end of rivet body 10, and mandrel head 23 is placed contiguously with the sleeve side end of rivet body 10.

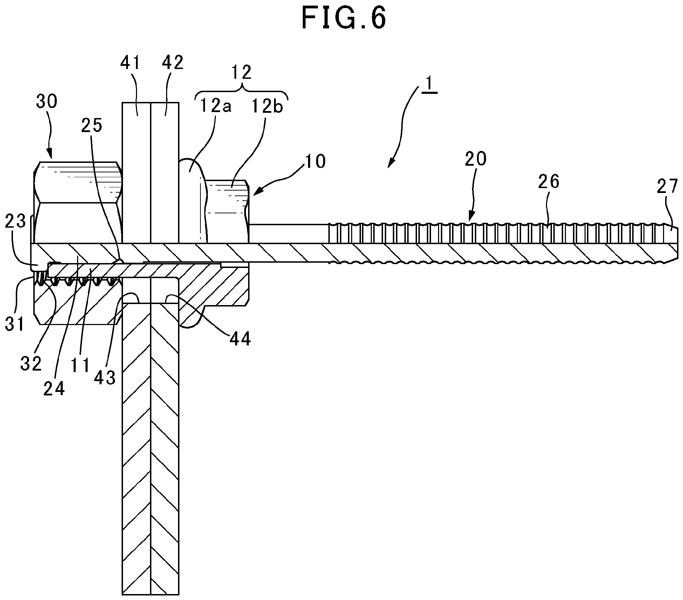

Next, we shall explain the appearance when nut 30 is assembled with blind rivet 1 and put in place in the attaching hole of a workpiece. Figure 5 is a perspective view of blind rivet 1 and nut 30 of the embodiment of the present invention, assembled, and put in place in attaching holes 43, 44 of workpieces 41, 42; this shows the step before fastening is carried out. Figure 6 is a front elevational view of a portion of Figure 5, in cross-section.

The outer diameter of the cross-section of nut 30 is polygonal, and a thread hole 31 is formed along its center axis. A female thread 32 is formed in thread hole 31. Nut 30 abuts workpiece 41, held so that thread hole 31 of nut 30 matches attaching hole 43 of workpiece 41. Nut 30 is held by a holding component which is not shown in the Drawings.

The embodiment of the present invention is explained using nut 30; however, instead of nut 30, a nut-shaped component may also be used which has parallel circumferential grooves formed in the circumferential direction, instead of a female thread 32 in the hole. In the Specification of the present invention, the nut-shaped component includes nut 30 which is formed with a female thread, and a nut-shaped component formed with circumferential grooves.

The inner diameter of the screw thread of female thread 32 of nut 30 is slightly larger than the outer diameter of sleeve 11, and sleeve 11 can be inserted into thread hole 31, since a slight gap is opened between sleeve 11 and the screw thread.

Blind rivet 1, consisting of the assembled rivet body 10 and mandrel 20, is inserted into attaching holes 43, 44 of workpieces 41, 42, and into thread hole 31 of nut 30, with mandrel head 23 going first. Sleeve 11 of rivet body 10 enters attaching holes 43, 44 of workpieces 41, 42 and goes into thread hole 31 of nut 30. Flange 12a abuts at the surface of workpiece 42 and is stopped.

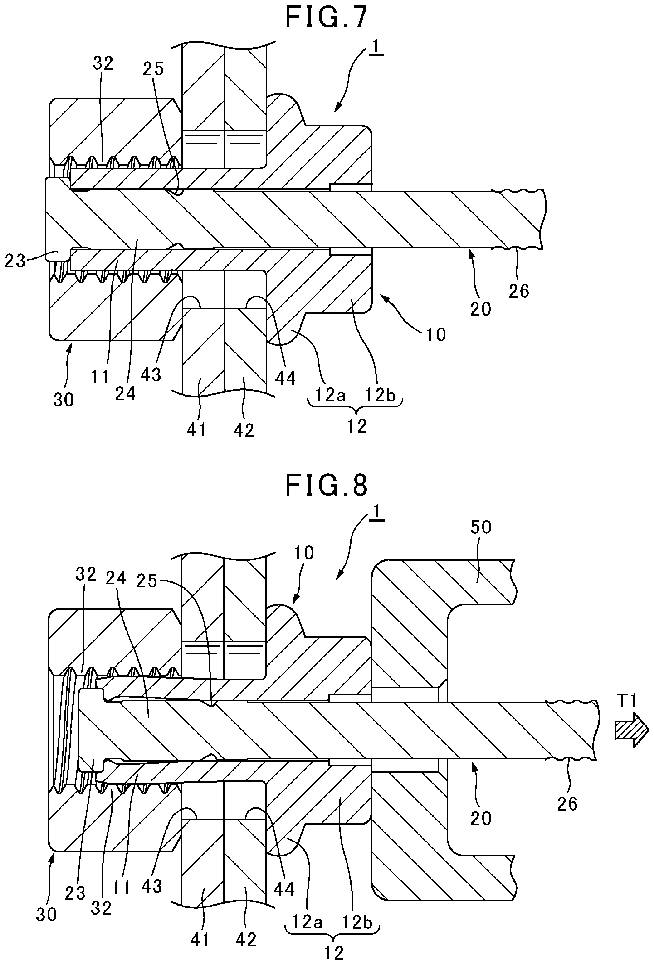

The operation of fastening workpieces 41, 42 with the blind rivet and nut in the embodiment of the present invention will be explained by referring to Figure 7-Figure 10. Figure 7 is a cross-sectional diagram which shows the appearance when blind rivet 1 of Figure 1 is put in place in attaching holes 43, 44 of workpieces 41, 42 and nut 30.

Workpieces 41 and 42 are overlapped so that the position of attaching hole 43 of workpiece 41 matches that of attaching hole 44 of workpiece 42. Nut 30 is put in place on workpiece 41 so that thread hole 31 of nut 30 matches attaching holes 43, 44. Nut 30 is held by a holding component (not shown in the Drawings.)

If nut 30 is not held by a holding component, it may be secured in advance by a method for joining and attaching it to workpiece 41.

The blind rivet 1 shown in Figure 1, with the assembled rivet body 10 and mandrel 20, is prepared. Grip 26 of mandrel 20 is gripped by the gripping component of an attaching tool (not shown in the Drawings). The end surface of the nosepiece (not shown in the Drawings) of the attaching tool is made to abut the end surface of polygonal portion 12b of rivet body 10. Blind rivet 1, gripped by the attaching tool, goes into the attaching holes of workpieces 41, 42 and the thread hole 31 of nut 30, from the right side in Figure 7, with mandrel head 23 going first. The end surface of flange 12a of rivet body 10 is made to abut the surface around attaching hole 44 of workpiece 42.

A method need not be used in which nut 30 is held by a holding component or is attached to workpiece 41; it is also possible to insert blind rivet 1 into attaching holes 43, 44 of workpieces 41, 42 first, and then to put in place nut 30 on rivet body 10 which projects from attaching hole 43 of workpiece 41, from the back.

A gap is opened between the screw thread of female thread 32 of nut 30 and sleeve 11 of rivet body 10.

Figure 8 is a cross-sectional diagram which shows an intermediate step when fastening workpieces 41, 42 by means of blind rivet 1. Nut 30 is held in the position shown in Figure 7. While holding the end surface of polygonal portion 12b of rivet head 12 of rivet body 10 with nosepiece 50 of the attaching tool, grip 26 of mandrel 20 is gripped with the gripping component of the attaching tool, and pulled out in the direction of arrow T1. Rivet body 10 is then compressed in the axial direction by mandrel head 23 and undergoes plastic deformation so as to expand in diameter; the outer peripheral surface of rivet body 10 abuts female thread 32 of nut 30.

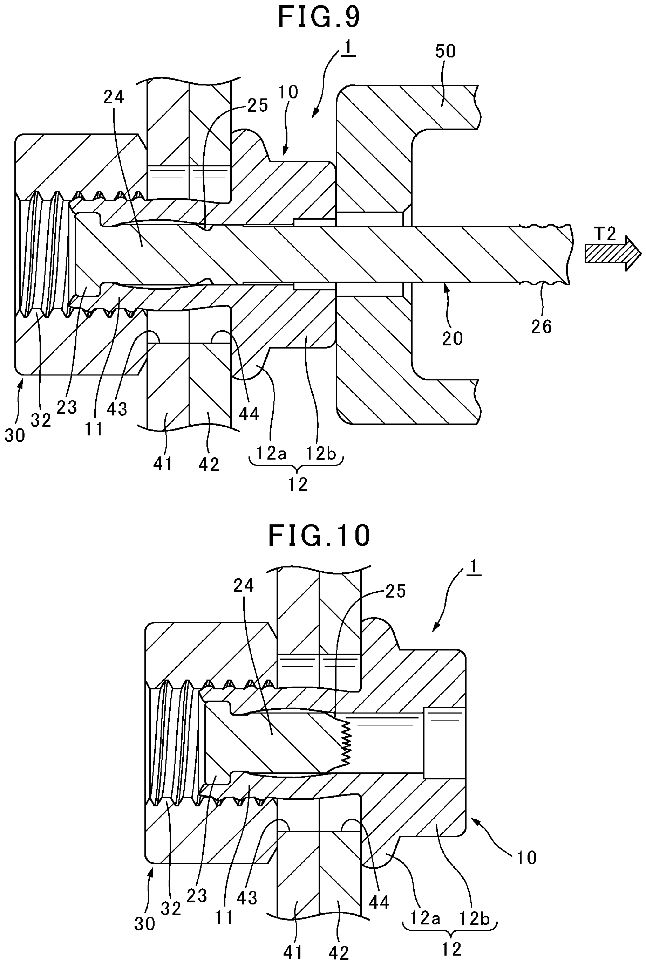

Figure 9 is a cross-sectional diagram which shows a step when the fastening operation is further along, in which grip 26 of mandrel 20 has been pulled out farther, in the direction of arrow T2 (which is the same direction as arrow T1). Nosepiece 50 holds the end surface of polygonal portion 12b. Rivet body 10 again undergoes deformation so that its outer diameter is expanded and engages in female thread 32 of nut 30. Mandrel head 23 pushes down on and widens the end of rivet body 10 and enters the end of rivet body 10, causing rivet body 10 to undergo deformation even in the direction in which mandrel 20 is pulled out, that is, arrow T2. A compressing force is applied to rivet body 10 in the axial direction, producing a fastening force.

Workpieces 41, 42 are clamped and secured between flange 12a of rivet body 10 and nut 30 which has engaged in rivet body 10.

Figure 10 is a cross-sectional diagram showing the appearance when the fastening operation is completed, with the gripping component of mandrel 20 pulled out further and removed from the attaching tool. If rivet body 10 undergoes large plastic deformation, rivet body 10 is work hardened, and plastic deformation then becomes difficult.

When the tensile stress exceeds the breaking limit, mandrel 20 breaks at breaking portion 25, and the side from mandrel head 23 to breaking portion 25 remains in the fastened portion. The portion of mandrel 20 which includes mandrel head 23 remains inside sleeve 11 of rivet body 10, and supports sleeve 11 from the inside. Sleeve 11 engages in the screw thread of nut 30, and as a result, the force which fastens workpieces 41, 42 between flange 12a and nut 30 is maintained, enabling these to be fastened solidly. Nosepiece 50 is withdrawn in the rightward direction in Figure 10, and the fastening is completed.

According to the embodiment of the present invention, thread hole 31 of nut 30 opens a gap with sleeve 11 before fastening, and, as a result, sleeve 11 can be simply inserted into thread hole 31 of nut 30 without being rotated.

During fastening, mandrel head 23 is pulled back into the end of sleeve 11 of rivet body 10, and sleeve 11 expands in diameter and engages in the screw thread of nut 30. Thereafter, sleeve 11 undergoes deformation in the axial direction as well, enabling a strong fastening force to be obtained.

In the embodiment of the present invention, a strong fastening force is produced in the axial direction, and workpieces 41, 42 can be fastened forcibly.

In the usual fastening method for blind rivets, the end of the sleeve of the rivet body is buckled, and the workpiece is fastened between the flange and the end of the buckled sleeve. There is a great amount of variability in the force required to cause buckling. In the embodiment of the present invention, after the end of rivet body 10 has been pushed down and widened and made to engage in female thread 32 of nut 30, sleeve 11 is further compressed by mandrel head 23, producing a stress; as a result, the fastening force can be controlled by the breaking stress of mandrel 20.

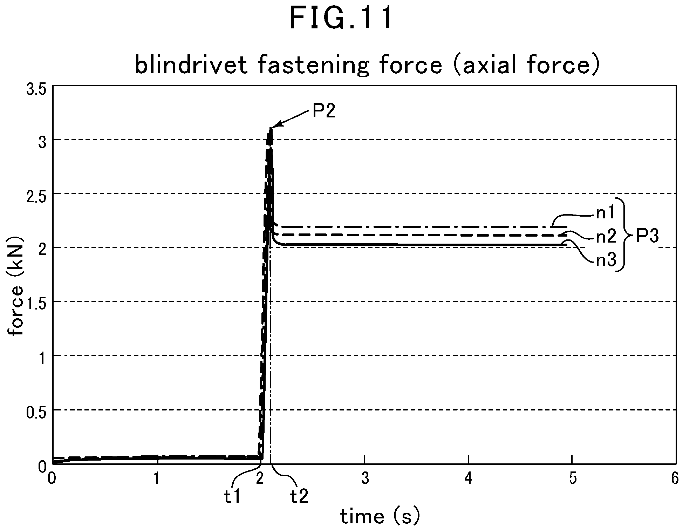

Figure 11 is a diagram showing an example of the measurement of the relationship between time and stress when a blind rivet is fastened by the methods used in Figure 7-Figure 10. Measurements were taken on three samples n1-n3. When the extraction of mandrel 20 is carried out, the stress begins to increase at time t1. When sleeve 11 begins to undergo deformation, the stress increases abruptly, reaching a maximum stress of P2 (approximately 3.15 kN) at time t2. When the mandrel breaks at breaking portion 25, the stress decreases abruptly. After mandrel 20 breaks, the stress P3 on samples n1-n3 is 2.0-2.2 kN and is maintained approximately uniformly.

After mandrel 20 breaks, the stress is lowered somewhat from its maximum of P2, and the lower stress is maintained. This is the fastening force. The magnitude of the stress at the time mandrel 20 breaks is proportional to the fastening force (axial force). When the mandrel is pulled out in the present invention and the sleeve of the rivet body has been expanded in diameter and made to engage in the female thread of the nut, the fastening force can be controlled by the breaking stress of the mandrel, since sleeve 11 is further compressed by mandrel head 23, producing an axial force. For this reason, by keeping the stress when mandrel 20 breaks at a predetermined value, it is possible to keep the fastening force after fastening at a value corresponding to the maximum stress.

By combining the blind rivet and the nut in the embodiment of the present invention, a workpiece can be fastened with a stabilized fastening force, by expanding the diameter of the sleeve and causing it to engage with the female thread of the nut.

### Keys to text in Drawings

- 10: rivet body
- 11: sleeve
- 12: rivet head
- 12a: flange
- 12b: polygonal portion
- 14: through-hole
- 20: mandrel
- 21: shaft
- 23: mandrel head
- 24: columnar portion
- 25: breaking portion
- 26: grip
- 27: tip
- 30: nut
- 31: thread hole
- 32: female thread
- 41: workpiece
- 42: workpiece
- 43: attaching hole
- 44: attaching hole
- 50: nosepiece

## Claims

1. A fastening structure provided with a blind rivet and a nut-shaped component for fastening multiple workpieces that have attaching holes, **characterized by** the fact that the blind rivet includes a rivet body which has a hollow sleeve and a rivet head formed on one end of the sleeve, and is formed with a through-hole which extends from the sleeve side end to the rivet head side end; and a mandrel which has a long, narrow shaft that is longer than the rivet body and has an outer diameter smaller than the inner diameter of the sleeve, and a mandrel head that has an outer diameter larger than the inner diameter of the sleeve, but is smaller than the outer diameter of the sleeve; and in which the mandrel head is placed contiguously to the sleeve side end of the rivet body, and the shaft of the mandrel passes through the through-hole of the rivet body and projects from the rivet head side end; and
in which the inner diameter of the hole of the nut-shaped component is larger than the outer diameter of sleeve of the rivet body; and in which the nut-shaped component is placed on the outer periphery of the sleeve side end of the sleeve of the rivet body and the mandrel head.

2. A fastening structure as set forth in Claim 1, in which a female thread or circumferential grooves are formed on the inner surface of the hole of the nut-shaped component.

3. A fastening structure as set forth in Claim 1 or Claim 2, in which the rivet head has a large outer diameter flange that is contiguous to the sleeve, and a polygonal portion which is contiguous to the flange and is formed on the end, on the side opposite to the sleeve.

4. A fastening structure as set forth in Claim 3, in which the flange of the rivet body abuts a surface of the workpiece, and the nut-shaped component is placed so as to abut another surface of the workpiece.

5. A fastening structure as set forth in Claim 4, in which the end of the sleeve expands in diameter by being compressed by the mandrel head, and the expanded end of the sleeve engages in the female thread or circumferential grooves of the nut-shaped component, and the workpiece is fastened between the nut-shaped component and the flange.

6. A fastening structure as set forth in Claim 5, in which the mandrel breaks at a breakable portion, and the mandrel from the breakable portion to the mandrel head remains in the sleeve.

7. A fastening structure as set forth in Claim 5 or Claim 6, in which the mandrel head is pulled back inside the end of the sleeve, and the end of the sleeve is expanded in diameter.

8. A fastening structure as set forth in Claim 7, in which the sleeve is compressed in the center axis direction of the blind rivet.

9. A fastening structure in which multiple workpieces with holes are fastened by a blind rivet and nut, **characterized by** the fact that the blind rivet includes a rivet body which has a hollow sleeve and a rivet head formed on one end of the sleeve, and a through-hole that extends from the sleeve side end to the rivet head side, and a mandrel that has a shaft which breaks at a breakable portion, and has a mandrel head on one end; and
in which a nut is placed on the outer periphery of the sleeve side end of the sleeve of the rivet body and the mandrel head; and in which the flange of the rivet body abuts the surface of the workpiece, and the nut abuts another surface of the workpiece, and
in which the end of the sleeve is compressed and expanded in diameter by the mandrel head when the mandrel head is pulled back into the end of the sleeve, and engages in the female thread of the nut; and the workpiece is fastened between the nut and the flange.

10. A method for fastening multiple workpieces with holes by a blind rivet and a nut, **characterized by** the fact that the method is provided with a step in which one uses a rivet body which has a hollow sleeve, a flange at one end of the sleeve, and a rivet head contiguous to the flange, and which is formed with a through-hole; a mandrel which has a long, narrow shaft that is longer than the sleeve, and which has an outer diameter smaller than the inner diameter of the sleeve, and a mandrel head that is larger than the inner diameter of the sleeve, but smaller than the outer diameter of the sleeve; and a nut which has an inner diameter larger than the outer diameter of the sleeve of the rivet body; and the blind rivet is made from the assembled rivet body and mandrel so that the mandrel head is contiguous to the sleeve side end of the rivet body, and the shaft of the mandrel passes through the through-hole of the rivet body and projects from the rivet head side end; and the blind rivet is inserted into the attaching hole of a workpiece with the mandrel head going first, and the flange of the rivet body is made to abut the workpiece; and
the nut is placed on the outer periphery of the mandrel head and the end of the sleeve of the rivet body so that the surface of the nut abuts around the attaching hole of the workpiece; and
when the mandrel head is pulled out from the rivet head side, while supporting the rivet head, the end of the sleeve is compressed by means of the mandrel head and expands in diameter, and the outer periphery of the end of the sleeve engages in the female thread of the nut, and the workpiece is fastened between the nut which is engaged in the expanded diameter end of the sleeve and the flange.

## Amended claims

### Amended claims under Art. 19.1 PCT

**1.** A fastening structure provided with a blind rivet and a nut-shaped component, for fastening multiple workpieces that have attaching holes, which is **characterized by** the fact that the blind rivet includes a rivet body which has a hollow sleeve and a rivet head formed on one end of the sleeve, and is formed with a through-hole which extends from the sleeve side end to the rivet head side end; and a mandrel which has a long, narrow shaft that is longer than the rivet body and has an outer diameter smaller than the inner diameter of the sleeve, and a mandrel head that has an outer diameter larger than the inner diameter of the sleeve, but is smaller than the outer diameter of the sleeve; and in which the mandrel head is placed contiguously to the sleeve side end of the rivet body, and the shaft of the mandrel passes through the through-hole of the rivet body and projects from the rivet head side end; and
in which the inner diameter of the hole of the nut-shaped component is larger than the outer diameter of sleeve of the rivet body; and in which the nut-shaped component is placed on the outer periphery of the sleeve side end of the sleeve of the rivet body and the mandrel head.

**2.** A fastening structure as set forth in Claim 1, in which a female thread or circumferential grooves are formed on the inner surface of the hole of the nut-shaped component.

**3.** A fastening structure as set forth in Claim 1 or Claim 2, in which the rivet head has a large outer diameter flange that is contiguous to the sleeve, and a polygonal portion which is contiguous to the flange and is formed on the end, on the side opposite to the sleeve.

**4.** A fastening structure as set forth in Claim 3, in which the flange of the rivet body abuts a surface of the workpiece, and the nut-shaped component is placed so as to abut another surface of the workpiece.

**5.** A fastening structure as set forth in Claim 4, in which the end of the sleeve expands in diameter by being compressed by the mandrel head, and the expanded end of the sleeve engages in the female thread or circumferential grooves of the nut-shaped component, and the workpiece is fastened between the nut-shaped component and the flange.

**6.** A fastening structure as set forth in Claim 5, in which the mandrel breaks at a breakable portion, and the mandrel from the breakable portion to the mandrel head remains in the sleeve.

**7.** A fastening structure as set forth in Claim 5 or Claim 6, in which the mandrel head is pulled back inside the end of the sleeve, and the end of the sleeve is expanded in diameter.

**8.** A fastening structure as set forth in Claim 7, in which the sleeve is compressed in the center axis direction of the blind rivet.

**9.** *(Amended)* A fastening structure in which multiple workpieces with holes are fastened by a blind rivet and nut, **characterized by** the fact that the blind rivet includes a rivet body which has a hollow sleeve and a rivet head formed with a flange on one end of the sleeve, and a through-hole that extends from the sleeve side end to the rivet head side, and a mandrel that has a shaft which breaks at a breakable portion, and has a mandrel head on one end; and
in which a nut is placed on the outer periphery of the sleeve side end of the sleeve of the rivet body and the mandrel head; and in which the flange of the rivet body abuts the surface of the workpiece, and the nut abuts another surface of the workpiece, and
in which the end of the sleeve is compressed and expanded in diameter by the mandrel head when the mandrel head is pulled back into the end of the sleeve, and engages in the female thread of the nut, and the workpiece is fastened between the nut and the flange.

**10.** *(Amended)* A method for fastening multiple workpieces with holes by a blind rivet and a nut, **characterized by** the fact that the method is provided with a step in which one uses a rivet body which has a hollow sleeve, and a rivet head formed with a flange at one end of the sleeve, and which is formed with a through-hole; a mandrel which has a long, narrow shaft that is longer than the sleeve, and which has an outer diameter smaller than the inner diameter of the sleeve, and a mandrel head that is larger than the inner diameter of the sleeve, but smaller than the outer diameter of the sleeve; and a nut which has an inner diameter larger than the outer diameter of the sleeve of the rivet body; and the blind rivet is made from the assembled rivet body and mandrel so that the mandrel head is contiguous to the sleeve side end of the rivet body, and the shaft of the mandrel passes through the through-hole of the rivet body and projects from the rivet head side end; and the blind rivet is inserted into the attaching hole of a workpiece with the mandrel head going first, and the flange of the rivet body is made to abut the workpiece; and
the nut is placed on the outer periphery of the mandrel head and the end of the sleeve of the rivet body so that the surface of the nut abuts around the attaching hole of the workpiece; and
when the mandrel head is pulled out from the rivet head side, while supporting the rivet head, the end of the sleeve is compressed by means of the mandrel head and expands in diameter, and the outer periphery of the end of the sleeve engages in the female thread of the nut, and the workpiece is fastened between the nut which is engaged in the expanded diameter end of the sleeve and the flange.

Statement under Art. 19.1 PCT
The Applicant has amended "a rivet head formed" in paragraph 2 of **Claim 9** to read "rivet head formed with a flange."

The Applicant has also amended "a flange at one end of the sleeve, and contiguous to the flange" in paragraph 2 of **Claim 10** to "and a rivet head formed with a flange at one end of the sleeve."

These amendments are based on the original paragraph [0026] of the application and what is set forth in Claim 3. Corrections are within the scope of the disclosure of the international application at the time of the application.
